# EUROPÄISCHE PATENTANMELDUNG

(11) **EP 1 788 827 A1**
(43) Veröffentlichungstag der Anmeldung: **23.05.2007**
(21) Anmeldenummer: 05025292.3
(22) Anmeldetag: 18.11.2005
(51) Int. Cl.: H04Q 7/32, H04L 12/56

(54) **Kommunikationssystem mit SIM-Karten Lesemodul**

(71) Anmelder: Delphi Technologies, Inc., Troy, MI 48007 (US)
(72) Erfinder: Zollner, Jürgen, 91126 Schwabach (DE)
(74) Vertreter: Manitz, Finsterwald & Partner GbR

(57) **Zusammenfassung**

Bei einem Kommunikationssystem insbesondere für ein Fahrzeug mit einer ein Telefonmodul umfassenden Kommunikationseinheit und einer SIM-Karten-Lese/Schreibeinheit erfolgt die Kommunikation zwischen der das Telefonmodul umfassenden Kommunikationseinheit und der SIM-Karten-Lese/Schreibeinheit zumindest teilweise auf der Basis eines Bluetooth SIM Access Profile. Dabei ist für die auf dem Bluetooth SIM Access Profile basierende Kommunikation zwischen der das Telefonmodul umfassenden Kommunikationseinheit und der SIM-Karten-Lese/Schreibeinheit eine Drahtverbindung vorgesehen.

## Beschreibung

Die Erfindung betrifft ein Kommunikationssystem insbesondere für ein Fahrzeug, mit einer ein Telefonmodul umfassenden Kommunikationseinheit und einer SIM-Karten-Lese/Schreibeinheit, wobei die Kommunikation zwischen der das Telefonmodul umfassenden Kommunikationseinheit und der SIM-Karten-Lese/Schreibeinheit zumindest teilweise auf der Basis eines Bluetooth SIM Access Profile erfolgt.

SIM-(Subscriber Identity Module)-Karten sind Chipkarten, die im Zusammenhang mit Mobiltelefonen bzw. dem GSM-(Global System for Mobile Communication)-Mobilfunk verwendet werden und der Identifikation des Nutzers im GSM-Netz dienen.

Bei dem Bluetooth SIM Access Profile handelt es sich um eine Technologie, über die der Zugriff beispielsweise einer Fahrzeug-Kommunikationseinheit mit integriertem Mobiltelefonmodul auf eine außerhalb der Kommunikationseinheit vorgesehene SIM-Karte geregelt wird. So können beispielsweise über eine dem Fahrzeug zugeordnete Kommunikationseinheit die jeweiligen Inhalte einer SIM-Karte eines portablen Mobiltelefons (Handy) übertragen werden, um hierüber eine Mobilfunkverbindung über das integrierte Mobiltelefonmodul zu erlauben.

Das Kommunikationssystem kann insbesondere einem Kraftfahrzeug zugeordnet sein.

In Fahrzeugen, insbesondere Kraftfahrzeugen, muss der SIM-Kartenhalter bzw. der die SIM-Karte aufnehmende Schlitz in der Regel in einem deutlichen Abstand von dem Telefon- bzw. GSM-Modul angeordnet sein, der mehrere Meter betragen kann. Dies ist insbesondere dann der Fall, wenn die SIM-Karten-Lese/Schreibeinheit von den Vordersitzen des Fahrzeugs aus zugänglich sein, d.h. beispielsweise im Bereich des Armaturenbretts, des Handschuhfachs oder dergleichen angeordnet sein soll, während die das GSM- bzw. Telefonmodul umfassende Kommunikationseinheit verdeckt beispielsweise hinter dem Armaturenbrett, im Kofferraum oder dergleichen untergebracht ist. Es gibt bisher jedoch keinen Anbieter von GSM-Modulen, der eine zertifizierte Erweiterung seiner Schnittstellenserie für SIM-Karten über eine Reichweite von 20 cm hinaus bereitstellt. Angesichts der in engen Grenzen vorgegebenen Signal-Zeitsteuerung und - Pegel für die SIM-Schnittstellen ergeben sich nun Probleme insbesondere bezüglich der Typzulassung. Technische Konzepte, bei denen die Signale entsprechend verstärkt werden, mögen zwar arbeiten. Die Chance, dafür eine Zulassung zu erhalten, ist jedoch gering.

Der Erfindung liegt die Aufgabe zugrunde, ein verbessertes Kommunikationssystem der eingangs genannten Art zu schaffen, bei der die zuvor genannten Probleme beseitigt sind.

Diese Aufgabe wird nach der Erfindung dadurch gelöst, dass für die auf dem Bluetooth SIM Access Profile basierende Kommunikation zwischen der das Telefonmodul umfassenden Kommunikationseinheit und der SIM-Karten-Lese/Schreibeinheit eine Drahtverbindung vorgesehen ist.

Es erfolgt also nach wie vor eine auf dem Bluetooth SIM Access Profile basierende Kommunikation zwischen der das Telefonmodul umfassenden Kommunikationseinheit und der SIM-Karten-Lese/Schreibeinheit. Für diese Kommunikation ist nunmehr jedoch anstatt einer drahtlosen Verbindung eine Drahtverbindung vorgesehen. Damit ist problemlos auch ein größerer Abstand zwischen dem GSM- oder Telefonmodul und der SIM-Karten-Lese/Schreibeinheit möglich. Dennoch kann weiterhin auf das für GSM-Produkte zugelassene und erprobte Bluetooth SIM Access Profile zurückgegriffen werden.

Bei der Kommunikationseinheit kann es sich insbesondere um eine so genannte Telematik-Einheit handeln.

Die auf dem Bluetooth SIM Access Profile basierende Kommunikation zwischen der das Telefonmodul umfassenden Kommunikationseinheit und der SIM-Karten-Lese/Schreibeinheit erfolgt zumindest teilweise vorteilhafterweise in Form eines seriellen Datenaustauschs.

Dabei kann ein solcher Datenaustausch im Rahmen der auf dem Bluetooth SIM Access Profile basierenden Kommunikation zwischen der das Telefonmodul umfassenden Kommunikationseinheit und der SIM-Karten-Lese/Schreibeinheit zumindest teilweise insbesondere asynchron erfolgen.

Bevorzugt erfolgt die auf dem Bluetooth SIM Access Profile basierende Kommunikation zwischen der das Telefonmodul umfassenden Kommunikationseinheit und der das SIM-Karten-Lese/Schreibeinheit zumindest teilweise über einen CAN-Bus (CAN = controller area network). Bei diesem CAN-Bus handelt es sich um einen von der ISO standardisierten Echtzeitfeldbus für die serielle Datenübertragung unter anderem in der Automotive-Technik.

Die betreffende Kommunikation kann vorteilhafterweise auch über eine UART-Verbindung erfolgen (UART = Universal Asynchronous Receiver Transmitter). Hierbei handelt es sich also um einen Chip, der als universaler asynchroner Sender und Empfänger arbeitet und für die Datenübertragung von und an die Schnittstelle zuständig ist.

Die auf dem Bluetooth SIM Access Profile basierende Kommunikation zwischen der das Telefonmodul umfassenden Kommunikationseinheit und der SIM-Karten-Lese/Schreibeinheit kann vorteilhafterweise zumindest teilweise auch über einem RS485-Bus erfolgen. Hierbei handelt es sich um einen Industrie-Bus, der grundsätzlich sowohl als 2-Draht- als auch als 4-Draht-System aufgebaut kann.

Die betreffende Kommunikation kann vorteilhafterweise aber auch über einen MOST-Bus erfolgen (MOST = Media Orientated Systems Transport). Hierbei handelt es sich um einen serielles Feldbussystem, das unter anderem für Multimediaanwendungen im Auto verwendet wird und auf einer synchronen Datenkommunikation basiert.

Das Telefonmodul der Kommunikationseinheit basiert vorzugsweise auf dem GSM-Standard (GSM = Global System for Mobile Communications). Ein solches System umfasst die Menge aller Spezifikationen und Schnittstellen, die für ein funktionierendes Mobilfunknetz benötigt werden.

Bei einer zweckmäßigen praktischen Ausführungsform des erfindungsgemäßen Kommunikationssystems umfasst die SIM-Karten-Lese/Schreibeinheit zumindest einen die Funktion eines Bluetooth SIM Access Profile Servers erfüllenden Prozessor.

Die SIM-Karten-Lese/Schreibeinheit umfasst bevorzugt eine auf dem GSM-Standard basierende SIM-Schnittstelle.

Gemäß einer zweckmäßigen praktischen Ausführungsform ist das Telefonmodul mit einer SIM Access Profile Client-Software nach dem GSM-Standard versehen.

Bei einer bevorzugten praktischen Ausführungsform umfasst das Telefonmodul mit Ausnahme von Tasten und eines Displays alle für das Netz, z.B. GSM-Netz erforderlichen Telefonfunktionen. Außerhalb des Telefonmoduls vorgesehene Tasten und/oder ein Display sind vorteilhafterweise über eine serielle Schnittstelle und ein vorgegebenes Protokoll an das Telefonmodul angebunden. Die Tasten und das Display können beispielsweise in einem Radio oder einer Navigationseinheit integriert oder daran angeschlossen sein.

Die Kommunikationseinheit umfasst vorzugsweise einen Treiber. Zudem ist die Kommunikationseinheit vorteilhafterweise mit einem Prozessor zum Durchreichen von Daten zwischen dem Telefonmodul und dem Treiber auf der Basis des Bluetooth SIM Access Profile versehen.

Bevorzugt umfasst auch die SIM-Karten-Lese/Schreibeinheit einen Treiber.

Bei einer zweckmäßigen praktischen Ausführungsform umfasst die SIM-Karten-Lese/ Schreibeinheit einen SIM-Kartenhalter. Die SIM-Karten-Lese/Schreibeinheit dient also einerseits der mechanischen Aufnahme der SIM-Karte und andererseits dem elektrischen Datenaustausch.

Die SIM-Karten-Schnittstelle ist innerhalb der GSM-Spezifikationen genau definiert und kann eine mehrdrahtige elektrische Verbindung umfassen, über die die Datenübertragung nach einem vorgegebenen Protokoll erfolgt. Das elektrische Timing auf diesem Bus ist sehr eng innerhalb der Spezifikation definiert, so dass für eine von der Kommunikationseinheit getrennte Anordnung der SIM-Karten-Lese/Schreibeinheit nicht einfach Verstärker eingesetzt werden können. Erfindungsgemäß wird dieses Problem dadurch gelöst, dass für die auf dem Bluetooth SIM Access Profile basierende Kommunikation zwischen der das Telefonmodul umfassenden Kommunikationseinheit und der SIM-Karten-Lese/Schreibeinheit anstatt der drahtlosen Verbindung eine Drahtverbindung vorgesehen ist. Dabei können, wie bereits erwähnt, vorteilhafterweise beispielsweise ein CAN-Bus oder ein RS485-Bus eingesetzt werden, bei denen es sich um serielle Bussysteme handelt. Dabei ist der CAN-Bus ein fahrzeugspezifischer Bus. Bei dem RS485-Bus handelt es sich um einen robusten Bus mit symmetrischer Übertragung.

Bei einer bevorzugten praktischen Ausführungsform des erfindungsgemäßen Kommunikationssystems sind die Kommunikationseinheit bzw. deren Telefonmodul und die SIM-Karten-Lese/Schreibeinheit in einem Abstand voneinander angeordnet, der größer als 20 cm ist. Bevorzugt ist der Abstand größer als 1 m und vorzugsweise größer als 2 m.

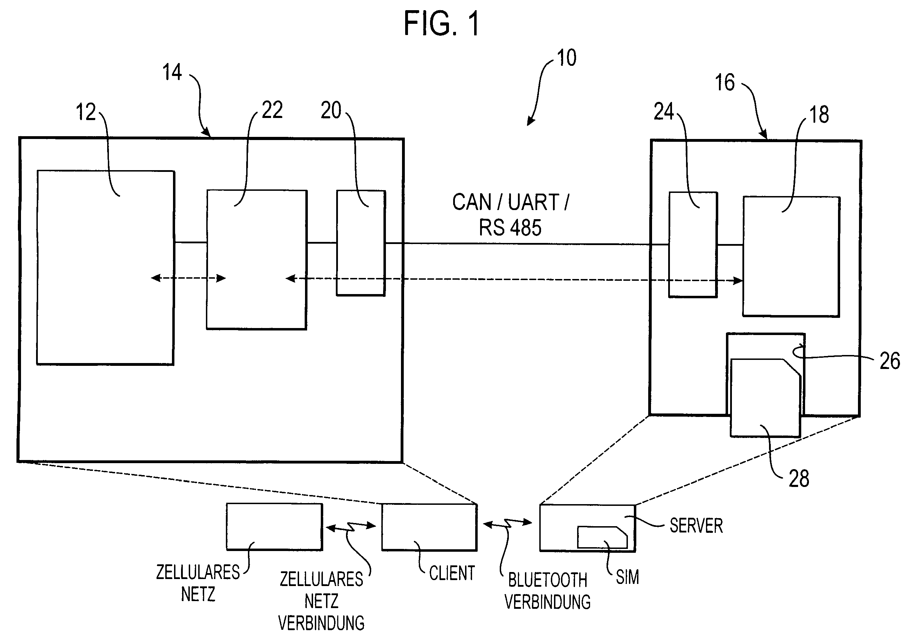

Die Erfindung wird im Folgenden anhand eines Ausführungsbeispiels unter Bezugnahme auf die Zeichnung näher erläutert.

Die einzige Figur der Zeichnung zeigt in rein schematischer Darstellung ein Kommunikationssystem 10, das insbesondere für ein Fahrzeug, vorzugsweise Kraftfahrzeug, bestimmt sein kann.

Dieses Kommunikationssystem 10 umfasst eine mit einem Telefonmodul 12 versehene Kommunikationseinheit 14, bei der es sich insbesondere um eine Telematikeinheit handeln kann, sowie eine SIM-Karten-Lese/Schreibeinheit 16.

Die Kommunikation zwischen der das Telefonmodul 12 umfassenden Kommunikationseinheit 14 und der SIM-Karten-Lese/Schreibeinheit 16 erfolgt zumindest teilweise auf der Basis des Bluetooth SIM Access Profile. Dabei ist für die auf dem Bluetooth SIM Access Profile basierende Kommunikation zwischen der das Telefonmodul 12 umfassenden Kommunikationseinheit 14 und der SIM-Karten-Lese/Schreibeinheit 16 eine Drahtverbindung vorgesehen.

Die auf dem Bluetooth SIM Access Profile basierende Kommunikation zwischen der Kommunikationseinheit 14 und der SIM-Karten-Lese/Schreibeinheit 16 erfolgt zumindest teilweise bevorzugt in Form eines seriellen Datenaustauschs. Dabei kann ein asynchroner oder auch ein synchroner Datenaustausch vorgesehen sein.

Die auf dem Bluetooth SIM Access Profile basierende Kommunikation zwischen der das Telefonmodul 12 umfassenden Kommunikationseinheit 14 und der SIM-Karten-Lese/Schreibeinheit 16 kann zumindest teilweise insbesondere über einen CAN-Bus, eine UART-Verbindung, einen RS485-Bus und/oder einen MOST-Bus erfolgen.

Das Telefonmodul 12 der Kommunikationseinheit 14 basiert bevorzugt auf dem GSM-Standard bzw. dessen Nachfolger (wie z.B. UMTS).

Die SIM-Karten-Lese/Schreibeinheit 16 umfasst einen die Funktionen eines Bluetooth SIM Access Profile Servers erfüllenden Prozessor 18.
Dabei kann dieser Prozessor 18 einen oder mehrere Mikroprozessoren umfassen. Zudem kann die SIM-Karten-Lese/Schreibeinheit 16 insbesondere mit einer auf dem GSM-Standard basierenden SIM-Schnittstelle versehen sein.

Das Telefonmodul 12 der Kommunikationseinheit 14 ist bevorzugt mit einer SIM Access Profile Client-Software nach dem GSM-Standard versehen. Zudem kann das Telefonmodul 12 mit Ausnahme von Tasten und eines Displays alle für das GSM-Netz erforderlichen Telefonfunktionen umfassen. Außerhalb des Telefonmoduls 12 vorgesehene Tasten und/oder Display können insbesondere über eine serielle Schnittstelle und ein vorgegebenes Protokoll an das Telefonmodul 12 angebunden sein. Dabei können die Tasten und das Display beispielsweise in einem Radio oder einer Navigationseinheit integriert oder daran angeschlossen sein.

Die Kommunikations- oder Telematikeinheit 14 kann mit anderen Infotainment-Einheiten über den Fahrzeugbus (z.B. CAN, MOST, ...) kommunizieren.

Die Kommunikationseinheit 14 umfasst überdies einen Treiber 20 sowie einen Prozessor 12 zum Durchreichen von Daten zwischen dem Telefonmodul 12 und dem Treiber 12 auf der Basis des Bluetooth SIM Access Profile. Der Prozessor 22 erfüllt also eine Art Relaisfunktion. Er kann beispielsweise einen oder mehrere Mikroprozessoren umfassen.

Auch die SIM-Karten-Lese/Schreibeinheit 16 ist mit einem Treiber 24 versehen.

Wie anhand der einzigen Figur zu erkennen ist, umfasst die SIM-Karten-Lese/Schreibeinheit 16 zudem einen SIM-Kartenhalter 26. Die SIM-Karten-Lese/Schreibeinheit 16 dient also einerseits der mechanischen Aufnahme der SIM-Karte und andererseits dem elektrischen Kartenaustausch.

Die SIM-Karten-Schnittstelle ist innerhalb der GSM-Spezifikationen genau definiert und umfasst z.B. eine mehrdrahtige elektrische Verbindung, über die die Datenübertragung entsprechend einem vorgegebenen Protokoll erfolgt. Das elektrische Timing auf diesem Bus ist innerhalb der Spezifikation sehr eng definiert, so dass für eine getrennte Anordnung der SIM-Karten-Lese/Schreibeinheit 16 in einer bestimmten Entfernung von der Kommunikationseinheit 14 nicht lediglich einige Verstärker eingesetzt werden können. Erfindungsgemäß wird dieses Problem dadurch gelöst, dass für die auf den Bluetooth SIM Access Profile basierende Kommunikation zwischen der das Telefonmodul 12 umfassenden Kommunikationseinheit 14 und der SIM-Karten-Lese/Schreibeinheit 16 eine Drahtverbindung vorgesehen ist.

Dabei können die Kommunikationseinheit 14 bzw. deren Telefonmodul 12 und die SIM-Karten-Lese/Schreibeinheit 16 nunmehr problemlos insbesondere auch in einem Abstand voneinander angeordnet sein, der größer als 20 cm ist. Dieser Abstand kann ohne weiteres auch größer als beispielsweise 1 m und vorzugsweise größer als beispielsweise 2 m sein. Selbst eine Entfernung von mehreren Metern zwischen dem GSM- oder Telefonmodul 12 und dem SIM-Kartenhalter 26 ist demzufolge problemlos möglich.

Soweit in der Beschreibung und in den Ansprüchen von dem GSM-Standard die Rede ist, soll damit stets auch ein nachfolgender Standard (wie z.B. UMTS) mit umfasst sein.

### Bezugszeichenliste

- 10: Kommunikationssystem
- 12: Telefonmodul, GSM-Modul
- 14: Kommunikationseinheit, Telematik-Einheit
- 16: SIM-Karten-Lese/Schreibeinheit
- 18: Prozessor
- 20: Treiber
- 22: Prozessor
- 24: Treiber
- 26: SIM-Kartenhalter
- 28: SIM-Karte

## Patentansprüche

1. Kommunikationssystem (10) insbesondere für ein Fahrzeug, mit einer ein Telefonmodul (12) umfassenden Kommunikationseinheit (14) und einer SIM-Karten-Lese/Schreibeinheit (16), wobei die Kommunikation zwischen der das Telefonmodul (12) umfassenden Kommunikationseinheit (14) und der SIM-Karten-Lese/Schreibeinheit (16) zumindest teilweise auf der Basis eines Bluetooth SIM Access Profile erfolgt,
**dadurch gekennzeichnet,**
**dass** für die auf dem Bluetooth SIM Access Profile basierende Kommunikation zwischen der das Telefonmodul (12) umfassenden Kommunikationseinheit (14) und der SIM-Karten-Lese/Schreibeinheit (16) eine Drahtverbindung vorgesehen ist.

2. Kommunikationssystem nach Anspruch 1,
**dadurch gekennzeichnet,**
**dass** die auf dem Bluetooth SIM Access Profile basierende Kommunikation zwischen der das Telefonmodul (12) umfassenden Kommunikationseinheit (14) und der SIM-Karten-Lese/Schreibeinheit (16) zumindest teilweise in Form eines seriellen Datenaustausches erfolgt.

3. Kommunikationssystem nach Anspruch 1 oder 2,
**dadurch gekennzeichnet,**
**dass** die auf dem Bluetooth SIM Access Profile basierende Kommunikation zwischen der das Telefonmodul (12) umfassenden Kommunikationseinheit und der SIM-Karten-Lese/Schreibeinheit (16) zumindest teilweise in Form eines asynchronen Datenaustausches erfolgt.

4. Kommunikationssystem nach einem der vorhergehenden Ansprüche,
**dadurch gekennzeichnet,**
**dass** die auf dem Bluetooth SIM Access Profile basierende Kommunikation zwischen der das Telefonmodul (12) umfassenden Kommunikationseinheit (14) und der SIM-Karten-Lese/Schreibeinheit (16) zumindest teilweise über einen CAN-Bus erfolgt.

5. Kommunikationssystem nach einem der vorhergehenden Ansprüche,
**dadurch gekennzeichnet,**
**dass** die auf dem Bluetooth SIM Access Profile basierende Kommunikation zwischen der das Telefonmodul (12) umfassenden Kommunikationseinheit (14) und der SIM-Karten-Lese/Schreibeinheit (16) zumindest teilweise über eine UART-Verbindung erfolgt.

6. Kommunikationssystem nach einem der vorhergehenden Ansprüche,
**dadurch gekennzeichnet,**
**dass** die auf dem Bluetooth SIM Access Profile basierende Kommunikation zwischen der das Telefonmodul (12) umfassenden Kommunikationseinheit (14) und der SIM-Karten-Lese/Schreibeinheit (16) zumindest teilweise über einen RS485-Bus erfolgt.

7. Kommunikationssystem nach einem der vorhergehenden Ansprüche,
**dadurch gekennzeichnet,**
**dass** die auf dem Bluetooth SIM Access Profile basierende Kommunikation zwischen der das Telefonmodul (12) umfassenden Kommunikationseinheit (14) und der SIM-Karten-Lese/Schreibeinheit (16) zumindest teilweise über einen MOST-Bus erfolgt.

8. Kommunikationssystem nach einem der vorhergehenden Ansprüche,
**dadurch gekennzeichnet,**
**dass** das Telefonmodul (12) der Kommunikationseinheit (14) auf dem GSM-Standard oder einem nachfolgenden Standard (wie z.B. UMTS) basiert.

9. Kommunikationssystem nach einem der vorhergehenden Ansprüche,
**dadurch gekennzeichnet,**
**dass** die SIM-Karten-Lese/Schreibeinheit (16) zumindest einen die Funktion eines Bluetooth SIM Access Profile Servers erfüllenden Prozessor (18) umfasst.

10. Kommunikationssystem nach einem der vorhergehenden Ansprüche,
**dadurch gekennzeichnet,**
**dass** die SIM-Karten-Lese/Schreibeinheit (16) eine auf dem GSM-Standard basierende SIM-Schnittstelle umfasst.

11. Kommunikationssystem nach einem der vorhergehenden Ansprüche,
**dadurch gekennzeichnet,**
**dass** das Telefonmodul (12) mit einer SIM Access Profile Client-Software nach dem GSM-Standard versehen ist.

12. Kommunikationssystem nach einem der vorhergehenden Ansprüche,
**dadurch gekennzeichnet,**
**dass** das Telefonmodul (12) mit Ausnahme von Tasten und eines Displays alle für das Netz erforderlichen Telefonfunktionen umfasst.

13. Kommunikationssystem nach Anspruch 12,
**dadurch gekennzeichnet,**
**dass** außerhalb des Telefonmoduls (12) Tasten und/oder ein Display vorgesehen sind, die über eine serielle Schnittstelle und ein vorgegebenes Protokoll an das Telefonmodul (12) angebunden sind.

14. Kommunikationssystem nach einem der vorhergehenden Ansprüche,
**dadurch gekennzeichnet,**
**dass** die Kommunikationseinheit (14) einen Treiber (20) umfasst.

15. Kommunikationssystem nach Anspruch 14,
**dadurch gekennzeichnet,**
**dass** die Kommunikationseinheit (14) einen Prozessor (22) zum Durchreichen von Daten zwischen dem Telefonmodul (12) und dem Treiber (20) auf der Basis des Bluetooth SIM Access Profile umfasst.

16. Kommunikationssystem nach einem der vorhergehenden Ansprüche,
**dadurch gekennzeichnet,**
**dass** die SIM-Karten-Lese/Schreibeinheit (16) einen Treiber (24) umfasst.

17. Kommunikationssystem nach einem der vorhergehenden Ansprüche,
**dadurch gekennzeichnet,**
**dass** die SIM-Karten-Lese/Schreibeinheit (16) einen SIM-Kartenhalter (26) umfasst.

18. Kommunikationssystem nach einem der vorhergehenden Ansprüche,
**dadurch gekennzeichnet,**
**dass** die Kommunikationseinheit (14) bzw. deren Telefonmodul (12) und die SIM-Karten-Lese/Schreibeinheit (16) in einem Abstand voneinander angeordnet sind, der größer als 20 cm ist.

19. Kommunikationssystem nach Anspruch 18,
**dadurch gekennzeichnet ,**
**dass** der Abstand größer als 1 m und vorzugsweise größer als 2 m ist.

## Geänderte Patentansprüche

### Geänderte Patentansprüche gemäss Regel 86(2) EPÜ.

**1.** Kommunikationssystem (10) insbesondere für ein Fahrzeug, mit einer ein Telefonmodul (12) umfassenden Kommunikationseinheit (14) und einer SIM-Karten-Lese/Schreibeinheit (16), wobei die Kommunikation zwischen der das Telefonmodul (12) umfassenden Kommunikationseinheit (14) und der SIM-Karten-Lese/Schreibeinheit (16) auf der Basis eines Bluetooth SIM Access Profile erfolgt,
**dadurch gekennzeichnet,**
**dass** für die auf dem Bluetooth SIM Access Profile basierende Kommunikation zwischen der das Telefonmodul (12) umfassenden Kommunikationseinheit (14) und der SIM-Karten-Lese/Schreibeinheit (16) eine Drahtverbindung vorgesehen ist.
